Europäisches Patentamt

European Patent Office

Office européen des brevets

(11) Veröffentlichungsnummer: **0 227 922**
A2

# (12) EUROPÄISCHE PATENTANMELDUNG

(21) Anmeldenummer: 86115506.7

(22) Anmeldetag: 08.11.86

(51) Int. Cl.4: **B63H 9/06** , D06N 7/00 ,
B32B 27/12

(30) Priorität: 19.11.85 DE 3540939

(43) Veröffentlichungstag der Anmeldung:
08.07.87 Patentblatt 87/28

(84) Benannte Vertragsstaaten:
DE FR GB IT

(71) Anmelder: HOECHST AKTIENGESELLSCHAFT
Postfach 80 03 20
D-6230 Frankfurt am Main 80(DE)

(72) Erfinder: Quirin, Armin
Lortzingstrasse 2
D-6947 Laudenbach(DE)
Erfinder: Zeptner, Knut
Lessingstrasse 9
D-6501 Ober-Olm(DE)
Erfinder: Ernst, Gottlieb
Habichtweg 9
D-6200 Wiesbaden-Nordenstadt(DE)
Erfinder: Schad, Alfred
Hauberisserstrasse 21
D-6200 Wiesbaden(DE)
Erfinder: Bremer, Wolfgang, Dr.
Gutenbergplatz 2
D-6200 Wiesbaden(DE)

(54) Farbechtes Sport- und Freizeitgerät.

(57) Es wird ein Sportgerät beschrieben, das insbesondere der sportlichen Fortbewegung in der Freizeit auf dem Wasser dient und sich durch hervorragende Farbechtheit auszeichnet. Das Sportgerät enthält einen Flächenverbund umfassend ein Fasergewebe und wenigstens eine mit dem Fasergewebe verbundene Folie aus thermoplastischem Kunststoff. Der Kunststoff ist für ultraviolettes Licht in einem Wellenlängenbereich von 200 bis 380 nm undurchlässig.

EP 0 227 922 A2

## Farbechtes Sport- und Freizeitgerät

Die vorliegende Erfindung betrifft ein Sport- und Freizeitgerät mit verbesserter Farbechtheit enthaltend einen Flächenverbund aus einem Fasergewebe und wenigstens einer mit dem Fasergewebe verbundenen Folie aus thermoplastischem Kunststoff.

Unter einem Sport- und Freizeitgerät sollen im Rahmen der vorliegenden Erfindung insbesondere Gegenstände verstanden werden, die unter Ausnutzung von Wind- und Sonnenenergie der sportlichen Fortbewegung in der Freizeit dienen. Derartige Gegenstände können beispielsweise Segelyachten, Windsurfgeräte oder Strandgleiter sein und darüber hinaus auch allgemein Hilfsmittel für wassersportliche Betätigung wie wasser- und wetterfeste Bekleidung oder Rettungseinrichtungen mit ins Auge springender Farbtönung wie Rettungsringe, Rettungsboote, Rettungszelte oder Rettungstaschen. Ferner sollen unter dem Begriff auch Flugobjekte wie Modellflugzeuge, Segelflugzeuge, Drachensegler, ultraleichte motorgetriebene Flugzeuge oder Luftballone fallen, welche insgesamt alle mehr oder minder flächige Bespannungen zur Erzeugung von Auftrieb ausnutzen.

Es sind bereits Segel, insbesondere Surfsegel, bekannt, die aus Tuch hergestellt sind, welches mit z.B. Polyesterfolie verbunden ist, wobei die Haftung der Schichten untereinander durch Klebstoff bewirkt wird. Derartige Segel sind luftdicht und ergeben eine größere Schubkraft als reine Tuchsegel. Sie können zur Verbesserung der Optik mit buntleuchtenden Farbstoffen eingefärbt sein. Sie sind beschrieben in der JP-A-59 15 6745 (entsprechend Derwent Abstract: AN-84-25 93 94/42). Eine weitere Anwendung von Verbunden aus Tuch und Polyesterfolie für Segelbekleidung ist in der JP-A-58 05 1147 (entsprechend Derwent Abstract: AN-83-42772K/18) beschrieben.

Die bekannten Materialien weisen den Nachteil auf, daß insbesondere die leuchtenden Farbstoffe bei längerer Einwirkung von intensivem Sonnenlicht durch die Wirkung der UV-Strahlen ihre Farbintensität verlieren und irreversibel verblassen.

Aus der DE-OS 21 23 437 ist bereits eine Methode bekannt, Schädigungen durch UV-Strahlen an einer Zierleiste zu vermeiden, nach der die Zierleiste mit einer Schicht aus Material überzogen wird, welches die Fähigkeit hat, ultraviolette Strahlung auszufiltern, insbesondere sollen hierzu fluorhaltige Polymere sowie Acrylat-Polymere in Schichtdicken zwischen 13 und 130 μm eingesetzt werden.

Derartige Überzüge müssen jedoch vergleichsweise recht dick sein, benötigen daher beachtliche Mengen an teuren Materialien und sind darüber hinaus auch noch empfindlich gegen mechanische Beschädigung.

Man ist deshalb dazu übergegangen, den Schutz gegen UV-Strahlung direkt in die zu - schützenden Schichten zu integrieren und zu diesem Zweck Substanzen in die Schichtmatrix einzubauen, die befähigt sind, mit der schädlichen UV-Strahlung in Wechselwirkung zu treten und dabei die schädigende Wirkung auszuschalten oder unter meßbare Grenzen herabzumindern. Derartige UV-stabilisierte Überzüge zum Schutz von Fotografien sind z.B. beschrieben in der US-A-4,378,392.

Mit der Verhinderung der Gelbfärbung oder dem Verlust mechanischer Eigenschaften, insbesondere von Polymeren wie Polystyrol, Acrylnitril-Styrol-Copolymeren oder Polyphenylether, durch Einwirkung von UV-Strahlen beschäftigt sich die EP-A-0 151 961. Eine Anwendung im Hinblick auf Sport und Freizeit ist allerdings noch nicht ins Auge gefaßt worden.

Für die vorliegende Erfindung bestand die Aufgabe, Sport- und Freizeitgeräte umfassend flächenhafte Verbunde von Fasergewebe oder -gewirke mit Folie aus thermoplastischen Kunststoffen zu schaffen mit besonders ansprechender Farbgestaltung, die darüber hinaus unempfindlich ist gegenüber der Langzeiteinwirkung von Sonnenlicht und die insbesondere bei Einwirkung von UV-Strahlen nicht verblasst.

Gelöst wird diese Aufgabe durch ein Sport- und Freizeitgerät der eingangs genannten Gattung, dessen Kennzeichenmerkmal darin besteht, daß der thermoplastische Kunststoff für ultraviolettes Licht in einem Wellenlängenbereich von 200 bis 380 nm undurchlässig ist.

Unter Sport- und Freizeitgerät sollen im Rahmen der vorliegenden Erfindung prinzipiell alle eingangs bereits genannten Gegenstände verstanden werden, besonders bevorzugt handelt es sich jedoch um Segel für Wasserfahrzeuge, insbesondere für Windsurfbretter.

Der das Segel bildende Flächenverbund umfaßt erfindungsgemäß bevorzugt eine Lage aus Fasergewebe oder -gewirke, welche beidseitig von Folien aus thermoplastischen Kunststoffen überzogen ist. Als thermoplastische Kunststoffe können prinzipiell alle Kunststoffe mit ausreichender Festigkeit eingesetzt werden wie z.B. Polyolefine, Polyester, Polyvinylchlorid oder Polyamide. Bevorzugte Polyolefine sind Polyethylen und Polypropylen, insbesondere isotaktisches Polypropylen mit einem n-heptanlöslichen Anteil von 15 Gew.-% und weniger, Copolymere von Ethylen und Propylen mit einem Ethylengehalt von 10 Gew.-% oder weniger, Copolymere von Polypropylen mit ($C_4$-$C_8$)-α-Olefinen mit einem ($C_4$-$C_8$)-α-Olefingehalt von 10 Gew.-% oder weniger. Das Propylenpolymere hat zweckmäßig einen Schmelzflußindex von 0,5 g/10 min bis 8 g/10 min bei 230°C und 2,16 kp Belastung (DIN 53735), insbesondere von 1,5 g/10 min bis 4 g/10 min, und einen Schmelzpunkt von 140°C oder höher, vorzugsweise von 150°C oder höher.

Als bevorzugte Polyester werden Polyester-Homo-und -Copolymere, Gemische verschiedener Polyester sowie Abmischungen und Blends von Polyestern mit anderen Polymeren eingesetzt.
Die Herstellung der Polyester kann sowohl nach dem Umesterungsverfahren mit den bekannten Katalysatoren wie z.B. Zn-, Ca-, Mn-, Mg-, Li-, Ge-Salzen oder nach dem DiDirektveresterungsverfahren erfolgen. Beispiele für Polyester sind Polyethylenterephthalat, Polytetramethylenterephthalat, Poly-1,4-cyclohexylendimethyl-terephthalat, Polyethylen-2,6-Naphthalat, bevorzugt ist Polyethylenterephthalat.

Die Copolyester können als Bausteine Adipinsäure, Sebacinsäure, Phthalsäure, Isophthalsäure, Sulfoisophthalsäure u.a. enthalten. Die nach dem Umesterungsverfahren hergestellten Polyester können sogenannte interne Partikel, Katalysatorrückstandsteilchen enthalten.
Beispiele für Polymere, die in den Polyester eingearbeitet werden können, sind Polyolefin-Homo-oder -Copolymere wie Polypropylen, Poly-4-methylpenten, Ethylen-Vinylacetat-Copolymere, die ihrerseits verseift sein können, Ionomere, Polyamide, Polycarbonate, fluorhaltige Polymere u.a.

Als Fasergewebe oder -gewirke können die üblicherweise als Segeltuch eingesetzten Materialien wie Leinen, Baumwolle oder Kunstfasern verwendet werden, bevorzugt wird Polyesterfaser eingesetzt.

Die Haftung der einzelnen Schichten des Flächenverbundes untereinander wird erfindungsgemäß durch Klebstoffzwischenschichten bewirkt. Hierzu wird bevorzugt ein Zweikomponentenkleber eingesetzt. Übliche geeignete Zweikomponentenkleber bestehen z.B. aus einer Polyester-urethan-Verbindung, die mit einem multifunktionellen Isocyanat vernetzt werden.

Die Farbgestaltung der Flächenverbunde geschieht erfindungsgemäß durch Farbstoffzusatz zu den Klebstoffschichten, wobei die einzelnen Lagen des Flächenverbundes über Druckantragswerke zunächst mit verschieden gefärbten Klebstoffen beschichtet sein können und daran anschliessend zu dem Flächenverbund zusammengeführt werden. Die Farbgebung kann aber genauso gut auch durch bedrucktes oder eingefärbtes Gewebe erreicht werden.

Die Undurchlässigkeit des thermoplastischen Kunststoffes für ultraviolettes Licht wird üblicherweise durch das ultraviolette Licht absorbierende Zuschlagstoffe bewirkt; der thermoplastische Kunststoff gilt dann als undurchlässig, wenn die durch eine Folie aus dem thermoplastischen Kunststoff hindurchtretende ultraviolette Strahlung in dem angegebenen Wellenlängenbereich von 200 bis 380 nm überwiegend, d.h. zu mehr als 80%, zurückgehalten wird. Die das ultraviolette Licht absorbierenden Zuschlagstoffe werden oft auch als UV-Stabilisatoren bezeichnet, da sie eine Beeinträchtigung der Stoffe, welchen sie zugesetzt sind, insbesondere Polymeren, durch ultraviolette Strahlung, die bei Polymeren z.B. Kettenabbau bewirkt, verhindern.

Als das ultraviolette Licht absorbierende Zuschlagstoffe werden erfindungsgemäß Stoffe aus der Gruppe der Benzophenone, der Benzotriazole, der substituierten Acrylate, der Acrylester oder der sterisch gehinderten Amine eingesetzt.
Bei den Benzophenonen sind insbesondere die 2-Hydroxybenzophenone hervorzuheben, die bevorzugt zur Erreichung spezieller Effekte wie Verträglichkeit oder geringe Flüchtigkeit noch weitere Substituenten tragen. Typische Beispiele sind:
2-Hydroxy-4-methoxy-benzophenon,
2-Hydroxy-4-octyloxy-benzophenon,
4-Dodecyloxy-2-hydroxy-benzophenon und
2,2'-Dihydroxy-4,4'-dimethoxy-benzophenon.

Als Benzotriazole werden insbesondere substituierte 2-(2'-Hydroxyphenyl)-benzotriazole eingesetzt. Beispiele hierzu sind:
2-(2'-Hydroxy-5'-methylphenyl)-benzotriazol,
2-(2'-Hydroxy-5'-t-octylphenyl)-benzotriazol und
2-(2'-Hydroxy-3',5'-dimethylphenyl)-benzotriazol.

Unter die Gruppe der substituierten Acrylate fallen Verbindungen wie:
Ethyl-2-cyano-3,3'-diphenyl-acrylat,
2-Ethylhexyl-2-cyano-3,3'-diphenyl-acrylat und
p-Methoxy-benzyliden-malonsäure-dimethylester.
Darüber hinaus können auch andere Ester als das ultraviolette Licht absorbierende Zuschlagmittel eingesetzt werden wie z.B. Arylsalicylate, Benzoate oder Ester enthaltend Resorcinbausteine. Beispiele hierzu sind:
Phenylsalicylat,
p-t-octylphenyl-salicylat,
Resorcinmonobenzoat und
2,4-Di-t-butylphenyl-3,5-di-t-butyl-4-hydroxybenzoat.

Eine weitere Gruppe von UV-Stabilisatoren sind die sterisch gehinderten Amine, deren Wirkung allerdings nicht durch ihre Fähigkeit, mit UV-Strahlen in Wechselwirkung zu treten, erklärbar ist, sondern die im wesentlichen als Peroxid-oder Radikalfänger fungieren und dadurch den Kettenabbau der Polymeren verhindern. Ein Beispiel für derartige Zuschlagstoffe ist Bis-(1,2,2,6,6-pentamethyl-4-Piperidinyl)-sebazat.

Die das ultraviolette Licht absorbierenden Zuschlagstoffe können prinzipiell nach mehreren unterschiedlichen Verfahren mit dem thermoplastischen Kunststoff zusammengebracht werden. Nach einer ersten Verfahrensvariante werden die genannten Verbindungen entweder einzeln oder in Kombination dem Kunststoffgranulat vor der Folienherstellung zugesetzt. Üblicherweise werden hierbei Mengen von 0,5 bis 5 Gew.-%, bevorzugt von 0,5 bis 2 Gew.-%, bezogen auf das Gesamtgewicht von Kunststoff und Zuschlagstoffen, dem Granulat zugegeben.

Die Folien aus thermoplastischem Kunststoff sollen zur Verbesserung ihrer mechanischen Eigenschaften bevorzugt biaxial streckorientiert und hitzefixiert sein. Derartige Folien werden nach dem Schmelzextrusionsverfahren hergestellt, bei dem zunächst der thermoplastische Kunststoff in einem Extruder aufgeschmolzen, durch eine Düse gepreßt und anschließend zu einer amorphen Vorfolie abgeschreckt wird. Danach wird die Vorfolie auf Strecktemperaturen erhitzt und in zwei senkrecht zueinander verlaufende Richtungen streckorientiert. Die Folie erhält dadurch ihre mechanische Festigkeit. Zur Dimensionsstabilisierung wird üblicherweise nach der Streckorientierung noch eine Thermonachbehandlung der Folie angeschlossen, bei der die Lage der Molekülketten des Polymeren durch Hitzeeinwirkung fixiert wird.

Derartige Folien weisen Dicken im Bereich von 10 bis 100 μm auf, für den erfindungsgemäßen Einsatzzweck als Segelmaterial hat es sich als besonders geeignet erwiesen, Folien mit Dicken im Bereich von 15 bis 60 μm einzusetzen.

Nach einer zweiten Verfahrensvariante können die das ultraviolette Licht absorbierenden Verbindungen der bereits genannten Art nachträglich auf die Folie aufgebracht werden, indem die fertig hergestellte Folie mit einer Lösung oder Dispersion von einer oder mehreren der das ultraviolette Licht absorbierenden Verbindungen in einem Löse-oder Dispersionsmittel beschichtet werden. Man geht hierbei aus von Lösungen einer Konzentration im Bereich von 0,5 bis 20 Gew.-% an das ultraviolette Licht absorbierenden Verbindungen, bevorzugt von 1 bis 15 Gew.-%, bezogen auf das Gesamtgewicht von Lösemittel und Gelöstem, wobei als Lösemittel meist organische Lösemittel verwendet werden. Vorteilhafter ist es jedoch, die Verbindungen aus wäßriger Dispersion an die Folie heranzutragen, da hierdurch die Handhabung teurer und gefährlicher organischer Lösemittel vermieden wird. Die Dispersionen enthalten üblicherweise neben den bekannten Dispersionshilfsmitteln einen Feststoffgehalt im Bereich von 10 bis 50 Gew.-% an das ultraviolette Licht absorbieren den Verbindungen, bevorzugt von 15 bis 40 Gew.-%, bezogen auf das Gesamtgewicht der Dispersion. Als besonders vorteilhaft hat es sich in der Praxis erwiesen, wenn die Dispersion während des Folienherstellungsprozesses, nämlich zwischen den beiden aufeinanderfolgenden Streckschritten, oder in dem Fall, wenn nur ein einziger Streckschritt vorgesehen ist, vor diesem einen Streckschritt aufgetragen wird.

Eine weitere Antragsverfahrensvariante ist das Imprägnieren der Folie bei höheren Temperaturen. Hierbei wird die fertige Folie auf höhere Temperaturen gebracht, dann durch ein Bad enthaltend eine Lösung oder Dispersion der das ultraviolette Licht absorbierenden Verbindungen hindurchgeführt und anschließend getrocknet. Das Imprägnierverfahren ist in "Modern Platics", 5/1975, Seite 58, beschrieben.

Eine weitere und letzte Verfahrensvariante besteht darin, die das ultraviolette Licht absorbierenden Verbindungen bereits bei der Herstellung des thermoplastischen Kunststoffes, also während des Prozesses der Polymerisation oder, im Fall von Polyester, der Veresterung oder Umesterung dem Kunststoff einzuverleiben. Hierbei werden die Verbindungen in Mengen von 0,1 bis 5 Gew.-%, bevorzugt von 0,5 bis 2 Gew.-%, dem Monomeren in dem Polymerisationskessel zugespeist, die Gewichtsprozentangaben sind bezogen auf das Gesamtgewicht von Monomeren und Zuschlagstoffen.

Die Tatsache, daß durch eine geringfügige Modifizierung des thermoplastischen Kunststoffes die Farbechtheit der erfindungsgemäßen Sport-und Freizeitgeräte sprunghaft gesteigert werden kann, ist als besonders überraschend anzusehen. Es ist nämlich besonders überraschend, daß gerade bei dem speziellen Einsatz der Flächenverbunde für Windsegel, welche in besonders hohem Maße Wind, Wetter und Sonnenlicht ausgesetzt sind, durch die erfindungsgemäß eingesetzten thermoplastischen Kunststoffe die Farbstoffe auf dem Segel so wirkungsvoll über längere Zeitdauer vor Ausbleichen durch ultraviolette Strahlung geschützt werden.

Es war darüber hinaus weiterhin überraschend, daß die ultraviolettes Licht absorbierenden Zuschlagstoffe, die dem thermoplastischen Kunststoff in einer Verfahrensvariante bereits vor der Fertigung der Folie zugesetzt werden, die bei der Folienherstellung auftretenden hohen Temperaturen unbeschadet überstehen und auch nach dem Durchlaufen aller Fertigungsstufen ihre Schutzwirkung in dem erfindungsgemäßen Sport-und Freizeitgerät ohne irgendeine Beeinträchtigung über die Zeitdauer von Jahren aufrechterhalten.

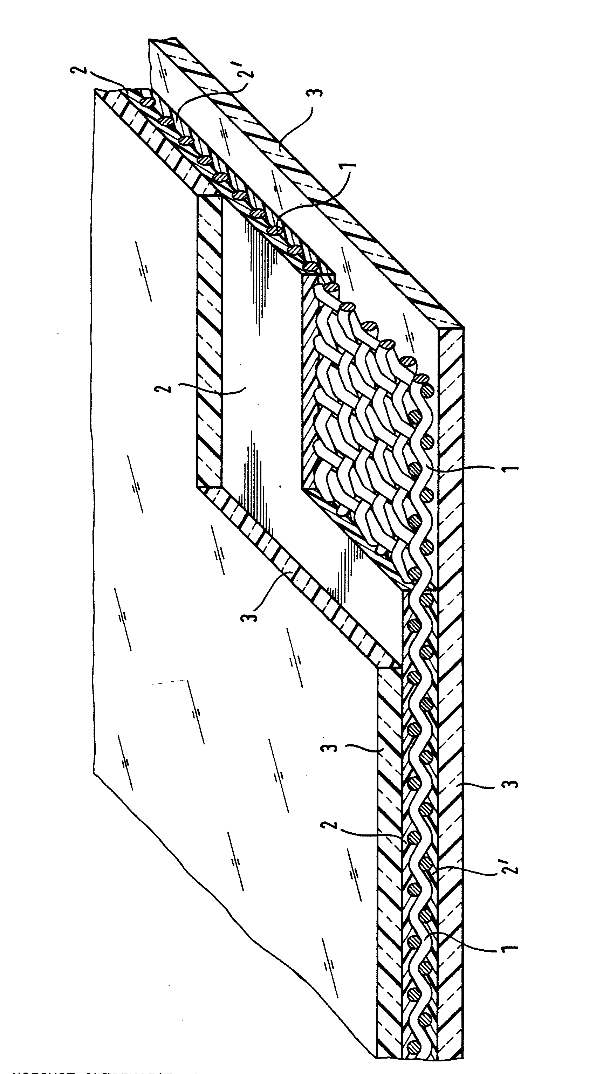

Die im vorstehenden in allen Einzelheiten beschriebene Erfindung soll nachstehend anhand der Zeichnung beispielhaft noch näher erläutert werden.

Die einzige Figur zeigt einen Schnitt durch einen Flächenverbund, wie er an dem erfindungsgemäßen Sport-und Freizeitgerät zur Anwendung kommt in seitlicher Ansicht.

Die Zeichnung zeigt insbesondere die Schicht aus Fasergewebe 1, die auf beiden Seiten von Deckschichten aus thermoplastischem Kunststoff 3 bedeckt ist. Die Folien aus Kunststoff 3 sind mit der Fasergewebeschicht 1 durch Zwischenschichten 2/2' aus Klebstoff enthaltend Farbstoffe verbunden.

**Ansprüche**

1. Sport-und Freizeitgerät mit verbesserter Farbechtheit enthaltend einen Flächenverbund aus einem Fasergewebe und wenigstens einer mit dem Fasergewebe verbundenen Folie aus thermoplastischem Kunststoff, dadurch gekennzeichnet, daß der thermoplastische Kunststoff für ultraviolettes Licht in einem Wellenlängenbereich von 200 bis 380 nm undurchlässig ist.

2. Sport und Freizeitgerät nach Anspruch 1, dadurch gekennzeichnet, daß es ein Segel für Wasserfahrzeuge, bevorzugt für Windsurfbretter ist.

3. Sport-und Freizeitgerät nach Anspruch 1 oder 2, dadurch gekennzeichnet, daß der thermoplastische Kunststoff ausgewählt ist aus der Gruppe umfassend Polyolefine, Polyvinylchlorid, Polyamide und Polyester, bevorzugt Polyolefine und Polyester.

4. Sport-und Freizeitgerät nach einem der Ansprüche 1 bis 3, dadurch gekennzeichnet, daß der thermoplastische Kunststoff Polypropylen oder Polyethylenterephthalat ist.

5. Sport-und Freizeitgerät nach einem der Ansprüche 1 bis 4, dadurch gekennzeichnet, daß das Fasergewebe des Flächenverbundes Segeltuch ist, bevorzugt aus Leinen, Baumwolle oder Kunstfaser, besonders bevorzugt aus Polyesterfaser.

6. Sport-und Freizeitgerät nach einem der Ansprüche 1 bis 5, dadurch gekennzeichnet, daß die einzelnen Schichten des Flächenverbundes durch Klebstoffzwischenschichten miteinander verbunden sind und daß die Färbung des Flächenverbundes durch Farbstoffzusatz zu den Klebstoffen bewirkt ist.

7. Sport-und Freizeitgerät nach einem der Ansprüche 1 bis 6, dadurch gekennzeichnet, daß als das ultraviolette Licht absorbierende Verbindungen Substanzen eingesetzt werden, ausgewählt aus der Gruppe Benzophenone, Benzotriazole, substituierte Acrylate und sterisch gehinderte Amine, bevorzugt substituierte Benzophenone.

8. Flächenverbund in einem Sport-und Freizeitgerät nach einem der Ansprüche 1 bis 7, dadurch gekennzeichnet, daß er ein beidseitig mit Folie aus thermoplastischem Kunststoff überzogenes Segeltuch umfaßt, wobei die Folie eine biaxial streckorientierte und hitzefixierte Polyethylenterephthalatfolie ist, die für ultraviolettes Licht in einem Wellenlängenbereich von 200 bis 380 nm undurchlässig ist.

9. Flächenverbund nach Anspruch 8, dadurch gekennzeichnet, daß die Polyethylenterephthalatfolie eine Dicke im Bereich von 10 bis 100 $\mu$m, bevorzugt im Bereich von 15 bis 60 $\mu$m, besitzt.